# EUROPEAN PATENT APPLICATION

(11) **EP 2 620 886 A1**
(43) Date of publication of application: **31.07.2013**
(21) Application number: 10857478.1
(22) Date of filing: 21.09.2010
(51) Int. Cl.: G06F 21/00

(54) **METHOD FOR DISTRIBUTING MULTIMEDIA INFORMATION**

(71) Applicant: Digieduca SL., 08195 Sant Cugat Del Vallés, Barcelona (ES)
(72) Inventor: MALLO BIAGIOLA, Federico, E-08195 Sant Cugat del Vallés Barcelona (ES)
(74) Representative: Elzaburu Marquez, Alberto
(86) International application number: PCT/ES2010/070610
(87) International publication number: WO 2012/038556

(57) **Abstract**

A method of distribution of multimedia information stored on an insertable physical storage support on a device of the customer, where an application receives an access request message from the physical support side; the access request solicits authorisation to access at least one multimedia information element stored on the physical support; the access authorisation permits the physical support side to display the selected information element on an audiovisual screen of the device of a customer; the server generates a reply message for the physical support side containing an authorisation file and transmits the reply message for the physical support side; and said authorisation file is stored in a storage partition on the physical support side.

## Description

### SUBJECT MATTER OF THE INVENTION

The present invention refers to a method of distribution for accessing elements of multimedia information on a physical support.

### STATE OF THE ART

Currently the distribution of individual elements of multimedia content is done by downloading one individual element of multimedia content from an application server of a multimedia service provider to a device of the customer through a telecommunications network such as an Internet network.

A potential customer of the service provider who wants to acquire the right to download an element of multimedia information, requests authorization by transmission of a message from a device of the customer to be able to access the server of the provider for the purpose of downloading a desired unit of multimedia information.

The server responds to the download request message received with an authorisation or refusal method of the right to carry out the requested download.

If the server transmits an authorisation message to carry out the download, said message includes a control or security key code to ensure the downloaded multimedia content is not disseminated from the customer's device to other devices without the authorisation or control of the multimedia content supplier, who holds the exclusive rights to disseminate the desired multimedia content element.

The download of an individual multimedia content element as a data stream involves occupying the telecommunications bandwidth of the network with the data stream associated to the individual multimedia element.

The dissemination of individual multimedia elements through the bandwidth of the telecommunications network has several drawbacks, such as the access of the bandwidth of each customer is different. Therefore, the smaller the bandwidth the longer the download of the individual multimedia element takes. Furthermore, said download may be subject to interruptions due to faults in the telecommunications network beyond the control of the customer and/or server, in which case the customer will have to restart the download of the individual multimedia element, etc.

All the foregoing negatively bears on the experience of the customer, which means that he may avoid requesting individual multimedia content elements, and, consequently, the expectations of the service provider will fall short. Even though its distribution system for individual elements of information may be very efficient, the provider faces external causes, that is, causes that are beyond the control of the provider, but which may have a negative influence on the provision of services that he offers.

### SUBJECT MATTER OF THE INVENTION

The present invention seeks to resolve one or more of the drawbacks described above by means of a multimedia information distribution method as is claimed in claim 1.

One object of the distribution of stored multimedia information on an insertable physical storage support on a device of the customer, is to receive an access request from the side of the physical storage support in such a way that through the access request authorisation is requested to access at least one stored element of multimedia information stored on the physical storage support and the access authorisation permits the physical storage support side to show the selected information element on an audiovisual screen of the device of the customer.

The response is transmitted to the physical support side, including an authorisation file, said authorisation file being stored in a storage partition on the physical storage support side.

Another object of the method is to verify the existence of an access authorisation file on the storage partition that is associated to an information element before issuing the access petition from the physical storage support side.

Another object of the method is to verify that the access petition is emitted by a valid side of the physical storage support.

The request comprises data on the user profile and the physical storage support.

### BRIEF LISTING OF THE DRAWINGS

A more detailed description of the invention is give in the following description and is based on the attached figures:

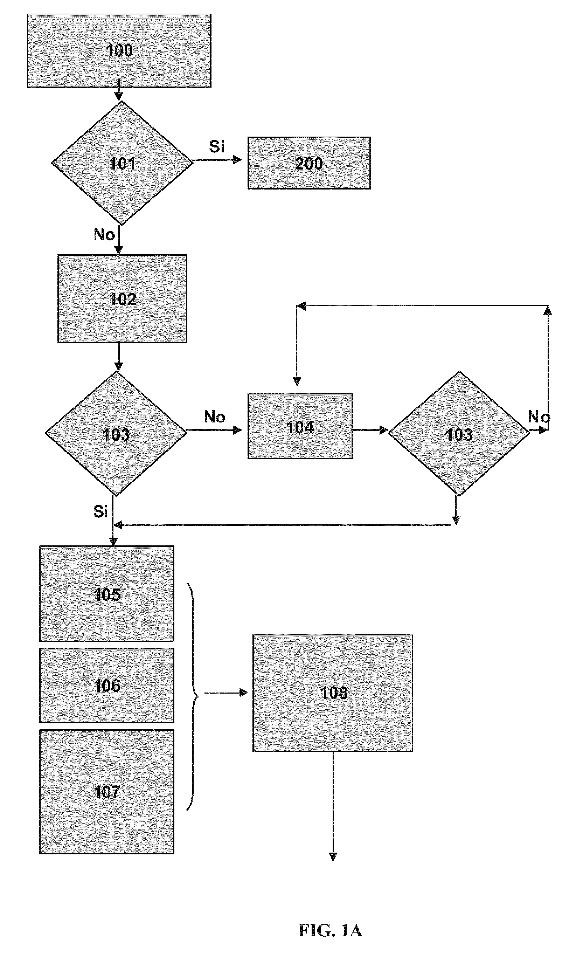

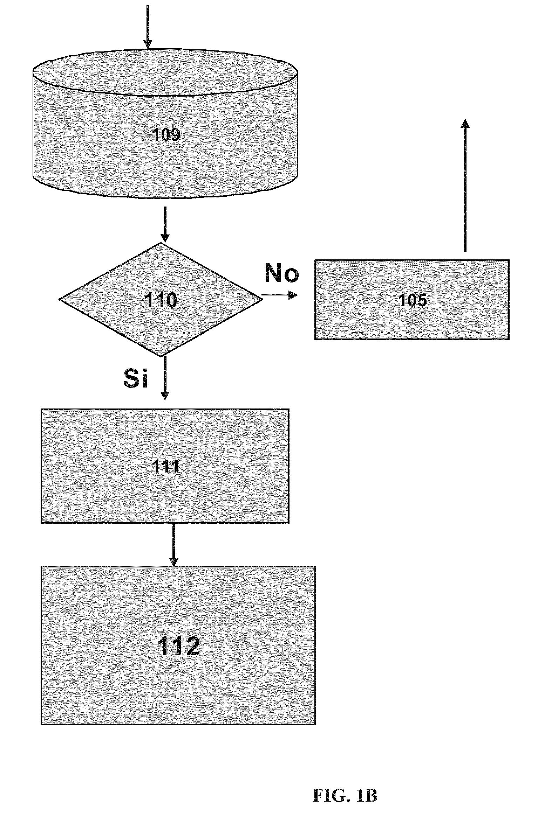

Figures 1A and 1B show a flow chart of the steps of the method of multimedia information distribution.

### DESCRIPTION OF A MODE OF EMBODIMENT

In relation now to Figures 1A and 1B, the method of distribution of multimedia information included in an insertable physical storage support in the device of a customer comprises the steps of inserting 100, properly said, of the support in a device of the customer, so that an installation application auto-executes.

The installation application is stored on the physical support and comprises 101 the existence or absence of an access authorisation data file associated to at least one individual multimedia content element, saved in the memory partition of the physical support.

If there is saved authorisation data 200, the content elements associated to said authorization data can be displayed on the audiovisual screen of the device of the customer. If not, that is, if there is no authorisation data saved in the memory partition, the installation program starts an process of establishing 102 a communication channel 102, 103.

If the establishment of the communication channel fails, aforesaid step 103 is repeated 104 until the communication channel is established.

Once the communication channel has been established, the installation program compiles the data of user profile 105, established connection 106, and data of device 107 of the customer in order to generate and emit 108 an access request message to one or more individual multimedia elements stored in the removable physical support.

After the request message is received in an application server, the server sends the data to a data storage module 109 in order to save it, and it also executes an authorisation directive for generating 110 and emitting 111 a reply message towards the device of the customer.

If a reply message cannot be transmitted 105, the method of information distribution is restarted.

The transmitted reply message is received in the device of the customer, which stores 112 in the removable physical support memory the data from the authorisation file that will be necessary for displaying 112 the content elements associated to the authorisation stored in the memory partition.

If there is authorisation data stored in the partition of the memory of the removable physical support, the elements associated to said authorisation may be displayed 200 directly on the same or on a different device of the customer without doing steps 102 to 112.

The application server of the access authorisation to multimedia information stored on an insertable physical support in a device of the customer comprises an input / output unit that receives the access request message from the physical storage support side; the access request with which authorisation is requested for accessing at least one multimedia information element; and the access authorisation allowing the device of the customer to display the selected information element on the audiovisual screen of said device. A processor generates the reply message for the physical support side, which includes the authorisation file; the input / output unit that transmits the reply message for the physical storage support side; and the authorisation file which is stored in a storage partition of the physical support side of the storage.

The method of distribution of multimedia information is executed every time the physical support is inserted in a device of the customer.

In the event the user of the removable physical support wants to access a different individual multimedia content element other than the information element for which he has access authorisation, the method of distribution of multimedia information is re-executed from the installation application. That is, said application asks the user if he wants to access a individual multimedia content element other than the one for which he has access authorisation. If so, the installation application is executed again to request access to an individual multimedia content element other than the one for which he has access.

Consequently, the method of distribution of multimedia information enables a service supplier of multimedia content to have the capacity to provide to a plurality of target customers, a removable physical storage support that comprises stored individual multimedia elements, said insertable support being a port on a device of the customer, for instance a USB type port, in such a way that the customer can request access to one of the stored content elements by means of the transmission of an access request message to an application server unit of the provider from the device of the customer for a desired individual multimedia content element through a telecommunications network.

This access request message for an element in particular, and / or all of the stored individual multimedia content elements, requires that the physical support of the removable storage be connected to the device of the customer, which, in turn, must be connected to the application server.

Therefore the first time each individual multimedia content element is accessed, it is conditioned to previously having obtained an access authorisation.

The application server, in reply to the access request message, replies with a reply message that includes an access authorization file for access to an individual multimedia element, or a file that refuses access to the requested element(s).

To this end, the application server executes a certain conditioned access directive stored in a memory storage module after a request message is received by the same.

The result of the execution of the directive depends on the data of the physical support; the profile of the user who has inserted the removable support in the device of the customer that is connected to the application server; the data stored in the memory module stored in the application server; and of other data that the server requests while executing the access directive.

The application server transmits the reply message to the device of the customer through the telecommunications network. The reply message containing the authorisation comprises storable data in a memory storage partition of the removable support inserted in the same for said purpose.

The access request message issued by the customer also includes identification data of at least one selectable individual multimedia content element.

Once a reply message containing an authorisation has been received in the device of the customer and has been stored in the memory partition of the removable support, said individual multimedia content element can be accessed from other devices of the customer without the need of sending a new access request message from the device of the customer in which the removable support is inserted, because the memory partition of the removable support includes data regarding the access authorisation to said desired element.

In light of the foregoing, it follows that the establishment of a connection between the device of the customer and the application server is established exclusively for the purpose of obtaining a unique access authorisation for said element, thus making it unnecessary to access repeatedly the desired individual multimedia content element, even though the physical support is inserted in a device of the customer other than the device of the customer from which the access request message was sent for said content.

Once the removable support is inserted in the device of the customer, the device recovers the portion of the authorisation file saved in the memory partition of the physical support and extracts the individual multimedia element desired by the customer.

The physical support of the removable storage includes encoded individual multimedia content elements; and an identification code of the storage support; a public code associable to an authorisation code transmitted from the server to the device of the customer, which can decode the desired multimedia element after the data regarding the authorisation is stored in the corresponding memory partition of the removable support.

Consequently, each storage support includes its own unique and particular identification code and an authorisation code for at least one selectable stored multimedia element. In other words, if the access request message includes the identification of several audiovisual content elements, the authorisation code stored in the removable support memory allows the customer access to said elements. Furthermore, each stored multimedia element in said support is likewise associated to a unique and particular public code. The aforesaid enables protecting the digital rights of multimedia content.

The server stores in the memory module an updatable list of the different codes contained in the physical storage supports distributed among a plurality of customers of the multimedia service provider.

Once the physical storage support is inserted by the customer into a device of the customer, the installation application or start-up application automatically executes in order to verify the existence or absence of a communication channel over the telecommunications network between the device of the customer and the server.

In the event said communication channel does not exist, the device of the customer executes a request directive for the establishment of a communication channel from the device of the customer.

Once the establishment of a communication channel has been verified, a selection message is displayed on the audiovisual screen for the customer to select at least one selectable multimedia element from among the multimedia elements contained on the physical support inserted into the device of the customer.

When the customer has made the selection of at least one selectable multimedia element, the device of the customer generates and transmits the access request message for the selected elements.

Once the request message is received in the server, the server executes the authentication directive in order to verify that the data received coincides with the data stored in the memory module..

After the server has verified the authenticity of the data included in the request message, it generates and emits the reply message over the established communication channel, which includes the access authorisation file for allowing the multimedia information content element selected by the customer to be shown on the multimedia display screen of the device of the customer.

If necessary, the device of the customer comprises means for decoding and deciphering the selected element for the purpose of showing the element on the multimedia display screen.

It should be noted that the device of the customer deciphers and shows the selected element but it does not store the deciphered data stream. Therefore, the customer may access the same individual multimedia content element through the different types of devices of the customer, with the exclusive requirement that the removable physical support has the access authorisation code for the desired individual multimedia content element saved in the partition memory.

Therefore, it is not necessary to establish beforehand a communication channel over the telecommunications network for transmitting and receiving messages towards and from the device of the customer after there is an authorisation code stored in the memory partition of the removable support.

Thus the communication channel is not busy downloading a selectable individual multimedia content element.

In the event the server transmits a reply message de-authorising access to the selectable element, the device of the customer shows a message regarding said de-authorisation on the audiovisual screen.

Consequently the server does not include the reply message in a authorisation access file. The de-authorisation reply message can be associated to a greater number of accesses than what is allowed for each individual multimedia content element.

The authorised access to a selectable multimedia element on the removable physical support may be coupled to the payment of an amount of money to the service provider for said access.

## Claims

1. **A distribution method** of multimedia information stored on an insertable physical storage support in a device of the customer, **characterised in that** the method comprises:
● Reception of an access request from the the physical storage support side; the access request solicits authorisation to access at least one element of multimedia information stored on the physical storage support and the access authorisation permits the physical storage support side to show the selected information element on an audiovisual screen on the device of the customer,
● Generation of a reply message for the physical support side containing an authorisation file,
● Transmission of the reply message for the physical storage support side, the authorisation file being stored in a storage partition of the physical storage support side.

2. **Method** in accordance with claim 1, **characterised in that** the method also comprises a step for verifying the existence of an authorisation file stored in the storage partition before emitting the access request message from the physical storage support side.

3. **Method** in accordance with claim 1 or 2, **characterised in that** the method also comprises the step of verifying whether the access request message is emitted by a valid physical storage support side.

4. **Method** in accordance with claim 3, **characterised in that** the request message comprises data of the profile of a user and on the physical storage support.

5. **A method** for accessing multimedia information stored on an insertable physical storage support in a port of the device of the customer, **characterised in that** the method comprises:
● Reception of an access request from a user in which the request solicits access to a stored predetermined element of multimedia information,
● Verification of the existence of an access authorisation file saved in a partition of the memory of the physical storage support.
● Display of the stored multimedia information element in an audiovisual screen of the device of the customer.

6. **Application equipment** for access authorisation to multimedia information stored on an insertable physical storage support on a device of the customer, **characterised in that** the application device comprises and input - output unit that receives an access request message from the physical storage support side; the access request solicits authorisation to access at least one multimedia information element stored on the physical storage support; the access authorisation permits the physical storage support side to display the selected information element on an audiovisual screen of the device of a customer; a processor generates a reply message for the physical support side containing an authorisation file; the input - output unit transmits the reply message for the physical storage support side; and said authorisation file is stored in a storage partition on the physical storage support side.

7. **A computer program** downloadable to an internal storage unit of a computer that comprises an input - output unit and a processor, **characterised in that** the computer program comprises executable instruction lines adapted for carrying out the steps of the method in accordance with claims 1 to 4, when it is executed on the computer.

8. **Computer program** in accordance with claim 7, **characterised in that** the computer program is saved on a support readable by computer.
